# EUROPEAN PATENT SPECIFICATION

(11) **EP 0 521 907 B1**
(45) Date of publication and mention of the grant of the patent: **09.08.1995**
(21) Application number: 91906062.4
(22) Date of filing: 26.03.1991
(51) Int. Cl.: C03B 37/07

(54) **METHOD AND APPARATUS FOR THE MANUFACTURING OF A MINERAL FIBRE FELT**
VERFAHREN UND VORRICHTUNG ZUM HERSTELLEN VON EINER MINERALFASERMATTE
PROCEDE ET APPAREIL POUR LA FABRICATION D'UN FEUTRE EN FIBRES MINERALES

(30) Priority: 28.03.1990 FI 901558
(43) Date of publication of application: 13.01.1993
(73) Proprietor: PAROC OY AB, 21600 Pargas (FI)
(72) Inventor: SOLIN, Peter, Arnold, Henrik, SF-20760 Piispanristi (FI); HJERPPE, Pertti, Kalevi, SF-21600 Pargas (FI); NYGARDAS, Carl-Gustav, SF-21600 Pargas (FI)
(74) Representative: Barlow, Roy James
(86) International application number: FI9100080
(87) International publication number: WO9114658

(56) References cited:
- CH-A- 617 162
- US-A- 4 240 815

## Description

The present invention relates to a method for the manufacturing of a mineral fibre felt according to which raw material is fed to a melting furnace and mineral melt is withdrawn continuously in the form of a melt flow through a melt opening provided in the melt furnace, the melt is fed to an apparatus for producing fibres from the melt, which fibres are collected to form a fibre felt, which optionally is processed further, whereby a parameter of the manufactured fibre felt which depends on the melt flow is measured. Further, the invention relates to an apparatus for carrying out the said method, which apparatus comprises a melting furnace, means for introducing the raw material to the furnace, and at least one discharge outlet for the mineral melt in the form of a melt flow, a device for producing fibres from the melt, and means for collecting these fibres to a fibre felt, a device for measuring a parameter of the fibre felt which depends on the melt flow, and a control device, e.g. a processor receiving signals from the measuring device. Such a method and apparatus are known from FI-patent 63924.

Mineral wool products are manufactured e.g. so that the required raw material is melted in an electric melting furnace, the mineral melt is withdrawn continuously from the furnace through a discharge outlet and converted to fibres e.g. by feeding it to a fiberizing apparatus that can consist of several rotating wheels from which the mineral melt is spun under formation of fibres or filaments. The so formed fibres are transported by an air current from the fiberizing apparatus and collected on a conveyor in the form of a fibre felt. The collection can take place either by collecting the fibres on the conveyor to form a felt with desired end thickness, or by forming a so-called primary web by collecting a thin layer of fibres and thereafter, e.g. by means of a pendulum conveyor, by folding this primary web to form a secondary felt of the desired thickness.

At some stage of the manufacturing of the felt a suitable binder is added, e.g. a resin that is activated at a final stage of the processing of the felt by e.g. heat. Thereby the fibres are bound together while forming a form stable felt of desired density and thickness that will then be formed to a desired product.

Naturally, it is of interest that the manufactured fibre felt shows as few variations as possible as to its structure, specifically as far as its weight, such as the weight of the manufactured felt per time or length unit, its density and/or surface weight are concerned. This means that if the part of the fibre processing line following the fiberizing apparatus is driven at a given speed to produce a fibre felt of a certain type from certain raw materials, possible variations in the above mentioned characteristics are mainly a result of the variations in the quantity or mass of melt being discharged from the furnace per time unit, i.e. the melt flow. Therefore, the aim is to keep the discharged melt flow constant.

Previously, several solutions have been proposed to reach this objective. As the melt quantity discharged per unit time is directly proportional to the static pressure prevailing at the melt level where the outlet is situated, the aim is to keep this static pressure substantially at a constant level. This is possible to achieve by e.g. maintaining the balance between the quantities of raw material introduced and the melt discharged, and there have been different proposals to achieve this. According to the JP application 62-330098, the raw material supply is controlled by weighing the quantity of melt in the furnace and by comparing this value with a predetermined value. A signal representing the resulting difference is in turn used to control a feeding apparatus for the raw material.

According to another solution described in the US Patent 4,641,319, the melting furnace is mounted so that it is possible to bring it in a tilted position using a tilt mechanism whereby the tilting angle of the furnace is controlled on the basis of the variations in the quantity of withdrawn melt per time unit. Also such a solution has been proposed (JP 62-328112) whereby the wall of the furnace is provided with an outlet with a relatively big height dimension, against which, on the outer side of the furnace, there is provided a sliding gate which can be raised and lowered and with an outlet that is smaller than the outlet in the wall of the furnace. By raising and lowering the sliding gate on the basis of the measured weight deviations in the furnace, the elevation of the outlet in the gate can be varied in order to maintain a substantially constant static pressure at the outlet at varying melt levels, and in this way to achieve a mainly constant flow rate from the furnace.

However, the above mentioned previously known solutions show certain disadvantages, in particular because all of them are exclusively based on the weighing of the melt in the furnace and a weight correction of the furnace cannot always be carried out rapidly. The flow rate further depends on the viscosity of the melt, and therefore also on the temperature in the furnace.

The CH patent specification 617 162 discloses a method and an apparatus for manufacturing a mineral fibre felt whereby raw material is fed into a melting furnace and mineral melt is withdrawn continuously through a melt outlet provided in the melting furnace, in form of a melt flow. The melt is transferred to an apparatus for producing fibres from the melt. The fibres are collected to form a fibre felt which optionally is processed further. The viscosity of the melt and the diameter of the melt flow at two different points of the melt flow is measured and the mass flow through the melt outlet is calculated on the basis of the measured values obtained. The calculated mass flow is compared with a set value for the mass flow and the difference between these values is used to regulate the melt flow by controlling the temperature of the melt. The teperature correction of the melt cannot be carried out rapidly either. Any variations in the fibre production and thus in the final fibre felt will not be corrected by using this method.

The FI-patent 63 924, on the other hand, discloses a method where at least one parameter is measured which affects the amount of mineral wool formed, such parameters being i.a. the power consumption of the fiberizing unit or the weight per time unit of melt flowing out of the furnace. These values are then processed in combination e.g. with a parameter corresponding to the surface weight of the formed felt to regulate the speed of the conveyor onto which the felt is formed, in order to regulate the surface weight of the felt. However, using the speed of the conveyor as a means of regulating the quality of the end product has the disadvantage in that it provides for an uneven production, and does not allow the use of the conveyor at its optimal or maximum speed at the production conditions in question. It is also of advantage to have the conveyor not included in the general regulating system in order to provide for a temporary additional means for adjusting the manufacturing conditions.

The present invention provides a method as indicated in the beginning that enables the production of a fibre felt product with the smallest possible and rapidly correctable variations in the characteristics of the end product. The method according to the invention is characterized by the fact that the measured value obtained is compared with a set value for the same parameter determined for the production conditions in question and the difference between the measured value and the set value is used to regulate the melt flow from the furnace.

The melt flow from the furnace is preferably regulated by regulating the size of the melt outlet but it is, however, also possible to regulate it by increasing the static pressure at the outlet, e.g. by tilting the furnace.

According to one embodiment, the parameter measured at the end product is weight related, e.g. weight per time unit or per length unit of the produced felt, its density or surface weight. These parameters can be measured in different ways and at any location in the apparatus after the fibre production stage. The measuring apparatus comprises preferably a suitable weighing appliance for measuring the weight of web products, e.g. a conventional conveyor type weighing appliance, or e.g. radioactive absorption measurement can be used. It is also possible to carry out a manual weighing of the finished product, e.g. by weighing manually mineral fibre sheets of a predetermined size.

The resulting measured value, i.e. the present value, is then compared with a value predetermind for the respective production conditions, the so-called set value, and a deviation of the measured value from the set value is used to regulate the flow from the furnace, preferably by regulating the size of the melt outlet. In this connection, by the size of the melt outlet is meant the cross-sectional surface area of the melt outlet in a plane substantially parallel to the side wall of the furnace. The regulation of the size of the melt outlet may, naturally, be carried out manually but, preferably, this will be carried out automatically. A control device, e.g. a processor, compares the resulting measured value from the measuring apparatus with the respective set value and produces a control signal corresponding to the difference between the measured value and the set value, that then is transferred to a regulating device to regulate the size of the melt outlet.

The size of the melt outlet is preferably regulated by using a movable, preferably sliding gate that can be raised and lowered and can be activated by the regulating device. The sliding gate may be equipped with an opening that, by changing the vertical position of the gate, to a greater or less extent, can be made to coincide with the outlet of the furnace wall, whereby the effective opening area is defined by the overlapping cross-sectional areas of both of the outlets. It is also possible to construct the sliding gate without an opening, whereby one edge of the sliding gate will act as a limiting edge for the outlet.

As a complement to the above mentioned control of the size of the melt outlet, there is also the possibility to use the measured value or its deviation from the set value to control the raw material supply to the furnace so that this substantially corresponds to quantity of discharged melt.

As a complement to the adjustment of the melt flow, preferably the melt outlet, that is carried out on the basis of a parameter of the end product, which provides for a good possibility to make adjustments for longer time intervals, i.e. a form of "rough adjustment" of the melt flow rate, there is the possibility to achieve e.g. a "fine tuning" of the size of the melt outlet that can react to fast disturbances in the melt flow.

Therefore preferably the mass flow through the fiberizing apparatus is measured in an additional step, the resulting measured value is compared with a set value for the mass flow determined for the production conditions in question, and the difference between these values is used to regulate the melt flow.

This regulation is also, preferably, controlled by a processor producing a signal corresponding to the difference between measured and set value and controlling the regulation of the melt quantity e.g. by regulating the size of the melt outlet.

The determination of the mass flow through the fiberizing apparatus is preferably carried out by measuring the power consumption of the drive unit of the fiberizing apparatus. For measuring the power consumption, conventional and per se known measuring apparatuses can be utilised. This control which is based on the fiberizing apparatus, enables faster correcting measures to be carried out than the control based on the end product, and therefore it is preferably used together with the last mentioned using a common control device.

For the control of the process it is also advantageous to be able to regulate the filling degree of the furnace. A constant filling degree will lead to constant temperature and pressure conditions in the furnace that will in turn balance the melt flow. This can be brought about by including in the described control process a per se known further measuring procedure, by which the weight of the furnace is measured continuously or intermittently in order to determine the melt quantities contained therein. Possible deviations from the desired set value are here used to control, over a control device, e.g. a processor, the raw material charging apparatuses.

As described above, the invention also relates to an apparatus for producing a mineral fibre felt as indicated in the beginning. This apparatus is characterized by the fact that it comprises a device controlled by the processor for regulating the melt flow, preferably by regulating the size of the melt outlet on the basis of the difference between the measured value and the set value of the said parameter.

Preferably, the above apparatus comprises an additional device for measuring the mass flow through the fiberizing apparatus, whereby this measured value is compared in a processor, with a set value for the mass flow through the fiberizing apparatus, and the melt flow is regulated, controlled by the processor, on the basis of the difference between the measured value and the set value. This is preferably achieved by measuring the power consumption of the drive means for the fiberizing apparatus. The melt flow is preferably regulated by regulating the size of the melt outlet.

The measured value for the power consumption is for fine adjustment and the value measured from the end product for rough adjustment of the size of the melt outlet, i.e. the melt flow.

The apparatus according to this invention further and preferably comprises a device for monitoring the filling degree of the furnace, preferably by weighing the furnace whereby the weighing result is compared in a control device, e.g. a processor, with the set value for the weight of the furnace, as well as a device controlled by the processor for regulating the raw material supply on the basis of the difference between the measured value and the set value of the weight of the furnace.

Preferably the one and the same control device collects the measured values and controls the different regulation devices on the basis of the differences between the measured values and the set values.

The invention is described in more detail in the following, referring to the annexed drawing showing schematically an embodiment of the invention.

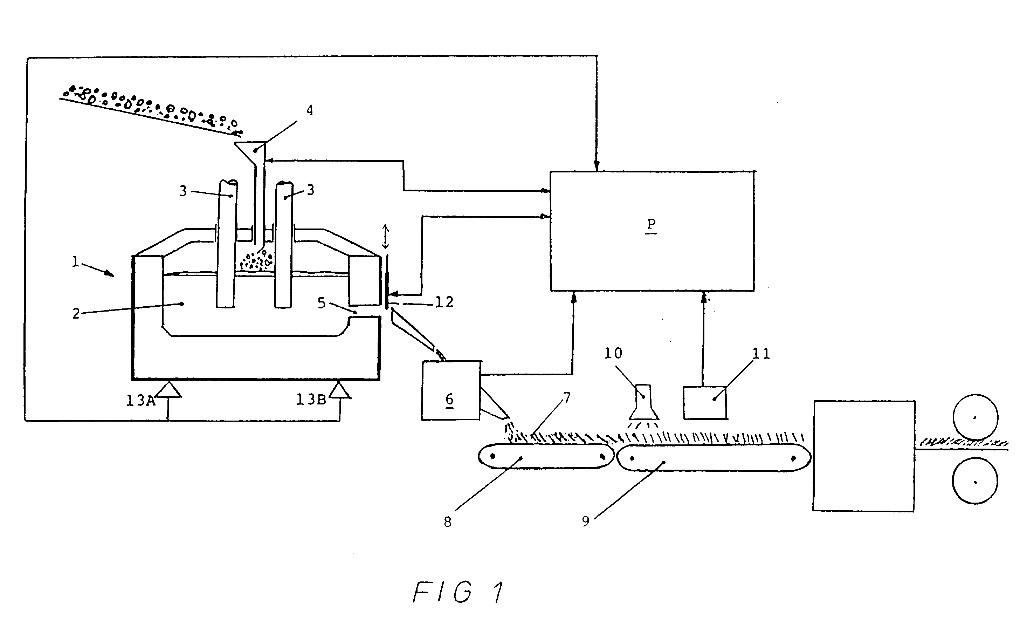

In the figure, the electric melting furnace is as a whole indicated by 1 which furnace is equipped with electrodes 3 extending into the furnace through the furnace cover into the melt 2, of which electrodes two are illustrated in the drawing. There is also a raw material feeding device 4 with associated conveyor for raw material, which extends through the furnace cover into the furnace above the level of the melt surface. Under the normal level of the melt surface, in the furnace wall, there is an outlet 5 through which melt is continuously discharged and fed to a device 6 for the production of fibres in an per se known way. The fiberizing device 6 comprising spin wheels against which the melt flow is supplied and slung further under the centrifugal force while forming fibres, is as such of a well-known conventional type. The formed fibres 7 are drawn by underpressure onto a belt conveyor 8, 9 and form a fibre felt. The felt is impregnated 10 with a binder and processed further, e.g. in a curing oven. This as such represents a well-known technical procedure.

The figure also shows a control device, e.g. a processor P, that is used to control the regulation of the melt flow by regulating the size of the melt discharge outlet 5 and optionally the supply of raw material. According to the invention, such a parameter of the felt that is depending on the mass of the melt flowing out from the outlet 5 in the furnace 1 is measured at a random point of the felt after the fiberizing apparatus 6 using a measuring device 11. A typical such parameter is the weight or the mass of produced felt per time unit that at constant felt production conditions is proportional to the weight of the felt per length, surface or volume unit. The measuring device 11 is typically a suitable type of a weighing appliance, e.g. a belt weighing device. A signal corresponding to the measured value is transferred to the processor P where the signal is compared with a set value for the same parameter determined for the production conditions in question. Based on the difference between the measured value and the set value of the said parameter, the processor P produces a control signal that in this case activates a device (not shown) for regulating the sliding gate 12 which can be raised and lowered. A change in the vertical position of the sliding gate 12 brings about a change in the cross-sectional surface area of the melt discharge outlet and consequently a correction in the melt flow. As indicated by the figure, the processor P can produce another control signal to activate the raw material supply through the supply tube 4, to adjust the raw material supply to match the discharged melt mass.

The above described control enables a basic adjustment, a rough adjustment, of both the size of the melt outlet and the raw material flow, and such a control might be fully satisfactory for many purposes and produce useful products. As, however, the parameter is measured at a relatively late stage of the production, the corrective influence will be somewhat deferred.

However, according to the present invention, it is possible to use, as the only control of the melt flow, preferably the size of the melt outlet, or as a complement to the above described control, a control based on the mass flow through the fiberizing apparatus 6. With such a control it will be possible to rapidly take into account and correct variations in the melt flow, i.e. it will be possible to achieve a kind of a fine adjustment of the flow. The parameter to be measured in this case is suitably the power consumption of the fiberizing apparatus that varies in relation to the melt flow, i.e. the load of the melt discharged from the furnace on the fiberizing apparatus, in which the spin wheels rotate at a constant speed. When the fiberizing apparatus is driven by an electric motor the power consumption and its variations can suitably be measured using conventional and known measuring devices.

The measured value from the fiberizing apparatus 6 is processed in the processor P in the same way as described above, and the produced control signal is brought to activate a suitable device for controlling the mass flow, e.g. by changing the vertical position of the sliding gate 12 in relation to the outlet.

The invention further comprises an optional device aimed to maintain the filling degree in the furnace 1 at a constant value. Thereby the weight of the furnace is sensed by using weighing cells 13a, 13b and the signal corresponding to the measured value is transferred to the processor P where it is compared with the corresponding set value. Based on the difference between the said measured value and the set value, the processor P produces a control signal to activate a device (not shown) to regulate the raw material supply.

## Claims

1. Method for the manufacturing of a mineral fibre felt according to which raw material is fed to a melting furnace (1) and mineral melt is withdrawn continuously in the form of a melt flow through a melt opening (5) provided in the melt furnace (1), the melt is fed to an apparatus (6) for producing fibres from the melt, which fibres are collected to form a fibre felt (7), which optionally is processed further, whereby a parameter of the manufactured fibre felt (7) which depends on the melt flow is measured, **characterized** in that the measured value obtained is compared with a set value for the same parameter determined for the production conditions in question and the difference between the measured value and the set value is used to regulate the melt flow.

2. Method according to the Claim 1, **characterized** in that the said parameter is weight related.

3. Method according to the Claim 2, **characterized** in that the parameter is comprised by the weight of produced felt (7) per time unit or length unit, the density of the felt or its surface weight.

4. Method according to any one of the Claims 1 to 3, **characterized** in that the signal corresponding to the measured value is compared in a control device, e.g. a processor (P), with the set value for producing a signal corresponding to the said difference to be used to regulate the melt flow.

5. Method according to any one of the Claims 1 to 4, **characterized** in that the said difference is also used for regulating the raw material supply into the furnace.

6. Method according to any one of the Claims 1 to 5, **characterized** in that in an additional measuring step the mass flow through the fiberizing apparatus (6) is measured, the measured value is compared with a set value for the mass flow under the production conditions in question, whereby the difference between these values is used to regulate the melt flow.

7. Method according to the Claim 6, **characterized** in that a signal corresponding to the measured mass flow is compared in a control device, e.g. a processor (P), with the set value, to produce a signal corresponding to the said difference to be used to regulate the melt flow.

8. Method according to any one of the Claims 1 to 4, **characterized** in that it comprises maintaining a constant filling degree in the furnace (1) by weighing the furnace (1) and by regulating the raw material supply into the furnace (1) on the basis of the measured value.

9. Method according to the Claim 8, **characterized** in that a signal corresponding to the weighing result is compared in a control device, e.g. a processor (P), with a set value for the furnace (1) weight under the production conditions in question for producing a signal corresponding to the said difference to be used to regulate the of raw material supply into the furnace.

10. Apparatus for continuously producing a mineral fibre felt, comprising a melting furnace (1), means (4) for introducing raw material to the furnace, and at least one discharge outlet (5) for the mineral melt in form of a melt flow, a device (6) for producing fibres from the melt, and means (8, 9) for collecting these fibres to a fibre felt (7), a device (11) for measuring a parameter of the fibre felt (7) which depends on the melt flow, and a control device, e.g. a processor (P) receiving signals from the measuring device (11), **characterized** in that the apparatus further comprises a device regulating the melt flow, preferably by regulating the size of the melt outlet (5) on the basis of signals produced by the processor (P) specifying a difference between the obtained measured value of said parameter and a set value for the same parameter.

11. Apparatus according to the Claim 10, **characterized** in that it comprises an additional device measuring the mass flow through the fiberizing apparatus (6), whereby this measured value is compared in a processor (P) with a set value for the mass flow through the fiberizing apparatus and the melt flow is regulated, controlled by the processor (P), on the basis of the difference between the measured value and the set value.

## Patentansprüche

1. Verfahren zum Herstellen einer Mineralfaserbahn, nach dem Rohmaterial einem Schmelzofen (1) zugeführt wird und Mineralschmelze durch eine im Schmelzofen (1) vorgesehene Austrittsöffnung (5) für die Schmelze in Form einer Schmelzströmung kontinuerlich entnommen wird, die Schmelze in eine Vorrichtung (6) zur Herstellung von Fasern aus der Schmelze eingebracht wird, die Fasern zur Bildung zu einer Faserbahn (7) aufgefangen werden, die gegebenenfalls weiter behandelt wird, wobei ein von der Schmelzströmung abhängiger Parameter der hergestellten Faserbahn gemessen wird, dadurch **gekennzeichnet,** daß der erhaltene Meßwert mit einem für die betreffenden Herstellungsbedindungen vorgegebenen Sollwert desselben Parameters verglichen wird und die Differenz zwischen dem Meßwert und dem Sollwert zur Regelung der Schmelzströmung verwendet wird.

2. Verfahren gemäß Anspruch 1, dadurch **gekennzeichnet,** daß als den genannten Parameter ein gewichtsbezoger Parameter verwendet wird.

3. Verfahren gemäß Anspruch 2, dadurch **gekennzeichnet,** daß der genannte Parameter aus dem Gewicht der hergestellten Faserbahn (7) pro Zeiteinheit oder Längeneinheit, der Dichte oder dem Flächengewicht der Faserbahn besteht.

4. Verfahren gemäß einem der Ansprüche 1 bis 3, dadurch **gekennzeichnet,** daß ein dem Meßwert entsprechendes Signal in einer Steuervorrichtung, z.B. in einem Prozessor (P), mit dem Sollwert verglichen wird, um ein die erhaltene Differenz darstellendes Signal zu erzeugen, das zur Regelung der Schmelzströmung verwendet wird.

5. Verfahren gemäß einem der Ansprüche 1 bis 4, dadurch **gekennzeichnet,** daß die genannte Differenz auch zur Regelung der Zuführung des Rohmaterials in den Schmelzofen verwendet wird.

6. Verfahren gemäß einem der Ansprüche 1 bis 5, dadurch **gekennzeichnet,** daß der Massenfluß durch die Zerfaserungsvorrichtung (6) in einem zusätzlichen Vorgang gemessen wird, der Meßwert mit einem für den Massenfluß unter entsprechenden Herstellungsbedindungen vorgegebenen Sollwert verglichen wird, wobei die Differenz zwischen diesen Werten zur Regelung der Schmelzströmung verwendet wird.

7. Verfahren gemäß Anspruch 6, dadurch **gekennzeichnet**, daß ein dem Meßwert des Massenflusses entsprechendes Signal in einer Steuervorrichtung, z.B. in einem Prozessor (P), mit dem Sollwert verglichen wird, um ein die erhaltene Differenz darstellendes Signal zu erzeugen, das zur Regelung der Schmelzströmung verwendet wird.

8. Verfahren gemäß einem der Ansprüche 1 bis 4, dadurch **gekennzeichnet,** daß der Füllstand im Schmelzofen (1) durch Wiegen des Schmelzofens (1) und durch Regelung der Rohmaterialzuführung in den Schmelzofen (1) auf einem konstanten Niveau gehalten wird.

9. Verfahren gemäß Anspruch 8, dadurch **gekennzeichnet,** daß ein dem Gewichtsmeßwert entsprechendes Signal in einer Steuervorrichtung, z.B. in einem Prozessor (P), mit einem für das Gewicht des Schmelzofens (1) unter entsprechenden Herstellungsbedindungen vorgegebenen Sollwert verglichen wird, um ein die erhaltene Differenz darstellendes Signal zu erzeugen, das zur Regelung der Zuführung des Rohmaterials in den Schmelzofen (1) verwendet wird.

10. Vorrichtung zur kontinuierlichen Herstellung einer Mineralfasebahn, bestehend aus einem Schmelzofen (1), Mitteln (4) zur Zuführung vom Rohmaterial in den Schmelzofen (1) und zumindest einer im Schmelzofen (1) vorgesehenen Austrittsöffnung (5) zur Entnahme der schmelze in Form einer Schmelzströmung, einer Vorrichtung (6) zur Herstellung von Fasern aus der Schmelze und Mitteln (8, 9) zum Auffangen der Fasern zu einer Faserbahn (7), einer Einrichtung (11) zum Messen eines von der Schmelzströmung abhängigen Parameters der Faserbahn (7) und einer Steuervorrichtung, z.B. einem Prozessor (P) zum Empfangen von Signalen von der Meßeinrichtung (11), dadurch **gekennzeichnet,** daß die Vorrichtung auch eine Einrichtung zur Einstellung der Schmelzströmung, vorzugsweise durch Einstellung der Dimension der Austrittsöffnung (5) für die Schmelze auf der Basis der von dem Prozessor (P) erzeugten Signalen, die eine Differenz zwischen dem erhaltenen Meßwert des genannten Parameters und einem für denselben Parameter vorgegebenen Sollwert darstellen, aufweist.

11. Vorrichtung gemäß Anspruch 10, dadurch **gekennzeichnet,** daß die Vorrichtung eine zusätzliche Einrichtung zum Messen des Massenflusses durch die Zerfaserungsvorrichtung (6) aufweist, wobei dieser Meßwert in einem Prozessor (P) mit einem für den Massenfluß durch die Zerfaserungsvorrichtung vorgegebenen Sollwert verglichen wird und die Schmelzströmung von dem Prozessor (P) gesteuert auf der Basis der Differenz zwischen dem Meßwert und dem Sollwert geregelt wird.

## Revendications

1. Méthode pour la fabrication d'un feutre de fibres minérales, méthode suivant laquelle un matériau brut est fourni à un fourneau de fusion (1), le bain minéral obtenu est extrait en continu sous la forme d'un flux de coulée à travers un orifice de coulée (5) prévu sur le fourneau de fusion (1), et le bain alimente un appareil (6) prévu pour former des fibres à partir du bain, lesquelles fibres sont collectées pour former un feutre de fibres (7), qui est éventuellement traité par la suite, un paramètre du feutre de fibres obtenu (7) étant mesuré, ce paramètre dépendant du flux de coulée, méthode caractérisée en ce que la valeur mesurée obtenue est comparée à une valeur de consigne établie pour le même paramètre selon les conditions de fabrication réelles, et en ce que la différence entre la valeur mesurée et la valeur de consigne est utilisée pour réguler le flux de coulée.

2. Méthode selon la revendication 1, caractérisée en ce que le dit paramètre est en rapport avec le poids.

3. Méthode selon la revendication 2, caractérisée en ce que le paramètre est compris dans le groupe constitué par le poids du feutre produit (7) par unité de temps ou unité de longueur, par la densité du feutre ou par son poids spécifique de surface.

4. Méthode selon l'une quelconque des revendications 1 à 3, caractérisée en ce que le signal correspondant à la valeur mesurée est comparé dans un dispositif de commande, par exemple un processeur (P), à la valeur de consigne afin de produire un signal correspondant à la dite différence, ce signal devant servir à réguler le flux de coulée.

5. Méthode selon l'une quelconque des revendications 1 à 4, caractérisée en ce que la dite différence est aussi utilisée pour réguler l'alimentation du fourneau en matériau brut.

6. Méthode selon l'une quelconque des revendications 1 à 5, caractérisée en ce que, dans une étape de mesure supplémentaire, le débit à travers l'appareil de fibrage (6) est mesuré, la valeur mesurée est comparée à la valeur de consigne pour le débit massique dans les conditions de fabrication réelles, la différence entre ces valeurs étant utilisée pour réguler le flux de coulée.

7. Méthode selon la revendication 6, caractérisée en ce qu'un signal correspondant au débit massique mesuré est comparé dans un dispositif de commande, par exemple un processeur (P), à la valeur de consigne, pour produire un signal correspondant à la dite différence, ce signal étant utilisé pour réguler le flux de coulée.

8. Méthode selon l'une quelconque des revendications 1 à 4, caractérisée en ce qu'elle comporte le maintien d'un degré de remplissage constant dans le fourneau (1) grâce à la posée du fourneau (1) et à la régulation de l'alimentation du fourneau en matériau brut sur la base de la valeur mesurée.

9. Méthode selon la revendication 8, caractérisée en ce qu'un signal correspondant au résultat de la posée est comparé dans un dispositif de commande, par exemple un processeur (P), à la valeur de consigne déterminée pour le poids du fourneau (1) dans les conditions de production réelles, afin de produire un signal correspondant à la dite différence, ce signal étant utilisé pour réguler l'alimentation du fourneau en matériau brut.

10. Appareil pour la production en continu d'un feutre de fibres minérales, comportant un fourneau de fusion (1), des moyens (4) pour introduire du matériau brut dans le fourneau, et au moins un orifce de décharge (5) pour extraire le bain minéral sous la forme d'une coulée, un dispositif (6) pour produire des fibres à partir du bain, et des moyens (8, 9) pour collecter ces fibres en un feutre de fibres (7), un dispositif (11) pour mesurer un paramètre du feutre de fibres (7), ce paramètre dépondant du flux de coulée, et un dispositif de commande, par exemple un processeur (P), recevant des signaux de l'appareil de mesure (11), caractérisé en ce que l'appareil comporte en outre un dispositif régulant le flux de coulée, de préférence en régulant la dimension de l'orifice de coulée (5) sur la base de signaux produits par le processeur (P) et représentant une différence entre la valeur mesurée obtenue pour le dit paramètre et une valeur de consigne établie pour le même paramètre.

11. Appareil selon la revendication 10, caractérisé en ce qu'il comporte un dispositif additionnel mesurant le débit massique traversant l'appareil de fibrage (6), cette valeur mesurée étant comparée dans un processeur (P) à une valeur de consigne établie pour le débit massique traversant l'appareil de fibrage, et le flux de coulée étant régulé, sous la commande du processeur (P), sur la base de la différence entre la valeur mesurée et la valeur de consigne.
